# EUROPÄISCHE PATENTANMELDUNG

(11) **EP 2 420 534 A1**
(43) Veröffentlichungstag der Anmeldung: **22.02.2012**
(21) Anmeldenummer: 11008179.1
(22) Anmeldetag: 19.02.2010
(51) Int. Cl.: C08K 5/01, C10M 101/02, C10M 105/20, C10M 109/02, C08F 8/06

(54) **Funktionalisierte Prozessöle und Verfahren zu ihre Herstellung**

(62) Teilanmeldung aus: 10001682.3
(71) Anmelder: Klaus Dahleke KG, 20457 Hamburg (DE)
(72) Erfinder: Trimbach, Jürgen, 21107 Hamburg (DE)
(74) Vertreter: Kossak, Sabine

(57) **Zusammenfassung**

Gegenstand der Erfindung ist ein funktionalisiertes Prozessöl auf Basis von Prozessölen aus der Mineralölraffination mit verbesserten Anwendungseigenschaften undein Verfahren zur Herstellung der Prozessöle. Die erfindungsgemäßen Prozessöle können u.a. als Weichmacher in Kautschuken oder Kautschukprodukten eingesetzt werden und führen zu einem verbesserten Verarbeitungs- und Alterungsverhalten.

## Beschreibung

Gegenstand der Erfindung ist ein funktionalisiertes Prozessöl auf Basis von Prozessölen aus der Mineralölraffination mit verbesserten Anwendungseigenschaften und ein Verfahren zur Herstellung der funktionalisierten Prozessöle.

Prozessöle, die bei der Erdölraffination gewonnen werden, sind seit langem bekannt und werden u.a. als Weichmacher oder Extenderöle in Natur- und Synthesekautschuken oder Kautschukprodukten eingesetzt. Die zunächst vielfach verwendeten aromatischen Prozessöle mit einem hohen Gehalt an polycyclischen Aromaten (PCA) haben sich als cancerogen erwiesen und werden deshalb zunehmend durch Prozessöle mit einem reduzierten PCA-Gehalt ersetzt. Bekannte Prozessöle mit niedrigerem PCA-Gehalt sind beispielsweise TDAE (treated distillate aromatic extract) und MES (mild extraction solvate). Diese Prozessöle werden bevorzugt als Weichmacher zur Verbesserung der gummielastischen Eigenschaften von Fahrzeugreifen und von technischen Gummiwaren eingesetzt.

Kautschukmischungen mit Weichmachern mit einem niedrigeren PCA-Gehalt sind beispielsweise aus der EP 1 270 657 A1 bekannt. Die hier beschriebenen Kautschukmischungen enthalten als Weichmacher naphthenische Mineralöle, MES oder TDAE. Diese Kautschukmischungen führen zu Reifen mit verbesserten Eigenschaften bezüglich Nassrutschfestigkeit, Tieftemperatureigenschaften, Abrieb, Rollwiderstand sowie bei der Herstellung der Kautschukmischungen selbst.

Kautschukprodukte und insbesondere Reifen sind einem Alterungsprozess unterworfen, der zu einer strukturellen Veränderung der Schwefelbrücken, einem Bruch der Polymerketten und häufig auch zu einem Verlust an Weichmacher führt. Durch den Verlust an Weichmacher haben die Reifen eine verringerte Nass- und Trockenhaftung und eine reduzierte Haltbarkeitszeit. Messungen haben gezeigt, dass aus der Reifenlauffläche innerhalb von zwei Jahren über 10 % Weichmacher ausgewaschen werden können, was zu einem deutlichen Anstieg der Härte des Reifens führt, verbunden mit den bekannten negativen Eigenschaften. Die herkömmlichen Weichmacheröle führen somit zu Produkten mit erwünschten Eigenschaften, jedoch kommt es durch die Alterung und/oder den damit bedingten Verlust an Weichmacher wieder zu einer Verschlechterung der Eigenschaften, der nicht durch die Zugabe von z.B. Alterungsschutzmitteln aufgefangen werden kann.

Aufgabe der Erfindung ist es daher, die Prozessöle so zu verbessern, dass sie beim Einsatz als Weichmacher in geringerem Umfang aus dem Kautschukprodukt austreten. Gleichzeitig sollen die Prozessöle eine verbesserte Verträglichkeit mit dem Füllstoff Kieselsäure aufweisen und die Einarbeitbarkeit von Weichmachern in den Kautschuk soll verbessert werden. Es ist weiterhin Aufgabe der Erfindung, ein einfaches und kostengünstiges Verfahren zur Herstellung der verbesserten Prozessöle zu entwickeln.

Die Aufgabe wird erfindungsgemäß gelöst durch ein funktionalisiertes Prozessöl, dadurch gekennzeichnet, dass das Prozessöl raffiniert, extrahiert und ggf. entparaffiniert ist, Hydroxylgruppen, Carbonylgruppen, Carboxylgruppen und/oder Estergruppen aufweist und hergestellt wird durch Oxidation eines Prozessöls, ausgewählt aus der Gruppe, bestehend aus TDAE (treated distillate aromatic extract), MES (mild extraction solvate), RAE, naphthenischen Prozessölen und paraffinischen Prozessölen, vorzugsweise aus TDAE und MES.

Weitere Ausführungsformen sind Gegenstand der Unteransprüche oder nachfolgend beschrieben.

Bevorzugt enthalten die erfindungsgemäßen, funktionalisierten Prozessöle einen oder mehrere Alkohole, Aldehyde, Ketone, Carbonsäuren und/oder Carbonsäurester.

Unter Prozessölen werden erfindungsgemäß Kohlenwasserstoffgemische verstanden, die im Schmierölbereich sieden, jedoch üblicherweise nicht als und auch nicht in Verbindung mit Schmierölen eingesetzt werden. Die erfindungsgemäßen Prozessöle werden bei der Raffination von Erdöl gewonnen. Das Rohöl wird einer atmosphärischen Destillation unterzogen, wobei alle Produkte abgetrennt werden, welche unter Normaldruck bis etwa 350°C sieden. Als Rückstand nach dem Abdestillieren erhält man ein Gemisch aus Bitumen, Asphaltenen, Wachsen und Schwerölen. Die Schweröle werden zu verschiedenen Produkten weiterverarbeitet, neben Schmierölen auch zu den Prozessölen, die vorzugsweise als Weichmacher verwendet werden.

Die unterschiedlichen Prozessöle, welche üblicherweise zur Funktionalisierung eingesetzt werden, haben z.B. die folgenden Kohlenstoffverteilungen, welche nach ASTM D 2140 bestimmt worden sind:

| | TDAE | MES | NAP | RAE | PAR |
|---|---|---|---|---|---|
| C_{A} | 25 | 15 | 13 | 34 | 3 |
| [Gew.-%] | | | | | |
| C_{N} | 30 | 27 | 33 | 28 | 35 |
| [Gew.-%] | | | | | |
| C_{P} | 45 | 58 | 54 | 38 | 62 |
| [Gew.-%] | | | | | |

Es ist zu beachten, dass es sich hierbei um beispielhafte Zusammensetzungen der einzelnen Prozessöltypen handelt und dass sich die Werte grundsätzlich innerhalb bestimmter Grenzen bewegen können. So gilt z.B. für NAP: C_{A} = 30 Gew.-%, C_{N} = 30-45 Gew.-%, C_{P} = 35-55 Gew.-% und für PAR: C_{A} < 10 Gew.-%, C_{N} = 20-35 Gew.-%,C_{P} = 60-75 Gew.-%.

Hierbei ist C_{A} der Gehalt an aromatischen Kohlenstoffatomen, C_{N} der Gehalt an naphthenischen Kohlenstoffatomen und C_{P} der Gehalt an paraffinischen Kohlenstoffatomen.

Das erfindungsgemäße, funktionalisierte Prozessöl ist bevorzugt ein oxidiertes Prozessöl mit vorzugsweise einem niedrigen Gehalt an polycyclischen Aromaten (PCA), vorzugsweise weist es einen Gehalt an PCA von weniger als 3 Gew.-% auf, entsprechend der EG-Richtlinie 769/76, ergänzt durch die Richtline 69/2005. Der Gehalt der erfindungsgemäßen Prozessöle an Aromaten (nicht polyzyklischen) beträgt vorzugsweise 0,2 bis 40 Gew.-%, bevorzugt 10 bis 30 Gew.-%. Bevorzugt weist das erfindungsgemäße Prozessöl 1 bis 8 Gew.-%, vorzugsweise 1,5 bis 3,5 Gew.-% Bestandteile mit Hydroxylgruppen, Carbonylgruppen, Carboxylgruppen und/oder Estergruppen auf, gemessen am Sauerstoffgehalt..

Das erfindungsgemäße Prozessöl wird hergestellt durch Oxidation eines Prozessöls, ausgewählt aus der Gruppe, bestehend aus TDAE (treated distillate aromatic extract), MES (mild extraction solvate), NAP (naphthenische Prozessöle), RAE (residual aromatic extract) und PAR (paraffinischen Prozessöle), vorzugsweise TDAE oder MES.

Die Herstellung der erfindungsgemäßen Prozessöle kann durch verschiedene chemische Umsetzungen erfolgen. Bevorzugt werden Prozessöle durch Oxidation mit Hydroxyl-, Carbonyl- und/oder Carboxylgruppen funktionalisiert, um die erfindungsgemäßen Prozessöle zu erhalten. Grundsätzlich können zur Funktionalisierung der Prozessöle durch Oxidation beliebige gängige Oxidationsmittel verwendet werden, wie z.B. Sauerstoff, sauerstoffhaltige Gasgemische, Luft, Peroxide, bevorzugt Wasserstoffperoxid, oder Natriumhypochloritlösung.

Die Aufgabe wird weiterhin gelöst durch ein Verfahren zur Herstellung eines funktionalisierten Prozessöls, dadurch gekennzeichnet, dass ein Prozessöl mit einem Oxidationsmittel, bevorzugt einem Sauerstoffgemisch, oxidiert wird. Das Verfahren umfasst bevorzugt die Schritte:
- Erhitzen eines raffinierten und ggf. extrahierten, ggf. hydrierten und/oder ggf. entparaffinierten Prozessöls auf eine Temperatur zwischen 50 und 180°C,
- Einleiten eines sauerstoffhaltigen Gemisches mit einem Sauerstoffanteil von 5 bis 50 Gew.-%, vorzugsweise Luft, oder eines Sauerstoff/Inertgasgemisches.

Die Einleitung des Sauerstoffgemisches erfolgt vorzugsweise über einen Zeitraum von 2 bis 80 Stunden, bevorzugt 10 bis 60 Stunden, besonders bevorzugt 20 bis 40 Stunden. Die Einleitung erfolgt in einer Ausführungsform unter Druck, bevorzugt 0,5 bis 2,5 bar.

Neben dem Sauerstoffgemisch, wie z.B. Luft, werden als Oxidationsmittel im erfindungsgemäßen Verfahren beispielsweise Peroxide, bevorzugt Wasserstoffperoxid, oder Natriumhypochloritlösung eingesetzt.

Als Edukte werden im erfindungsgemäßen Verfahren bevorzugt Prozessöle eingesetzt, die einen niedrigen PCA-Gehalt aufweisen, vorzugsweise einen PCA-Gehalt von weniger als 3 Gew.-% nach IP 346. Besonders bevorzugt ist das eingesetzte Prozessöl ausgewählt aus der Gruppe, bestehend aus TDAE, MES, NAP, RAE und PAR. Als besonders geeignet haben sich dabei TDAE und MES erwiesen.

Bei Einsatz des erfindungsgemäßen Verfahrens werden bevorzugt etwa 5 bis 40 Gew.-% des eingesetzten Prozessöls oxidert, d.h. dieser Anteil weist nach der Umsetzung Hydroxyl-, Carbonyl- und/oder Carboxylgruppen auf. Besonders bevorzugt weisen 10 bis 35 Gew.-%, insbesondere 15 bis 30 Gew.% des Prozessöls nach der Oxidation sauerstoffhaltige Gruppen im Molekül auf.
In einer Ausführungsform wird die Oxidation als Verfahrensschritt direkt im Anschluss an die Gewinnung des Prozessöls durch Raffination und ggf. Extraktion, ggf. Hydrierung und/oder ggf. Entparaffinierung durchgeführt.

Die erfindungsgemäßen funktionalisierten Prozessöle und die gemäß dem erfindungsgemäßen Verfahren hergestellten Prozessöle werden u.a. als Weichmacher für Kautschukmischungen auf Basis natürlicher oder synthetischer Kautschuke, vorzugsweise für Reifen und/oder technische Gummiwaren, oder als Druckfarbenöle eingesetzt. Das Kautschukprodukt/der Kautschuk enthält dabei bevorzugt 1 bis 50 phr (Parts per hundred rubber) Weichmacher. Besonders bevorzugt erfolgt die Verwendung als Weichmacher für Reifen, wobei die Lauffläche eines Pkw-Reifens bevorzugt 20 bis 45 phr und die Lauffläche eines Lkw-Reifens bevorzugt 5 bis 15 phr Weichmacher enthält.

Als Oxidation gemäß dem erfindungsgemäßen Verfahren können die bekannten Oxidationprozesse eingesetzt werden. Die Oxidation kann als Batchverfahren oder kontinuierlich durchgeführt werden. Bei einer kontinuierlichen Reaktionsführung wird die Oxidation bevorzugt in einer Reaktionskolonne, ausgestattet mit Füllkörpern, Siebböden oder ähnlichem, besonders bevorzugt in einer Glockenbodenkolonne, die im Gegenstromverfahren betrieben wird, durchgeführt. Bevorzugt wird eine Glockenbodenkolonne mit Heiz-/Kühlmantel verwendet.

Überraschenderweise verhalten sich die erfindungsgemäß funktionalisierten Prozessöle mit Kieselsäure anders als unbehandelte Öle. Während unbehandelte Prozessöle mit Kieselsäure überhaupt nicht kompatibel sind, lässt sich zwischen den erfindungsgemäß funktionalisierten Prozessölen und dem hydrophilen Füllstoff Kieselsäure eine Affinität nachweisen. Das bedeutet, dass die Kompatibilität der erfindungsgemäßen Prozessöle mit dem Füllstoff Kieselsäure signifikant verbessert ist gegenüber nicht funktionalisierten Ölen. Die Verarbeitbarkeit von Kieselsäure als Füllstoff in der Kautschukindustrie wird dadurch signifikant verbessert.

Aufgrund dieser verbesserten Kompatibilität der erfindungsgemäßen Prozessöle zum Füllstoff Kieselsäure kann wesentlichen bislang ungelösten Probleme besser begegnet werden, als dieses mit den bislang eingesetzten Prozessölen auf Mineralölbasis möglich war. Es ergeben sich verbesserte Alterungseigenschaften aufgrund besserer physikalischer Anbindung der erfindungsgemäßen Prozessöle an den Füllstoff Kieselsäure und eine dadurch verringerte Migration der Prozessöle im Compound sowie im Vulkanisat.

### Verbesserte Verarbeitbarkeit im Mischprozess:

Aufgrund der OH-Gruppen an der Oberfläche der Kieselsäurepartikel, begleitet von einer Ausbildung von Wasserstoffbrückenbindungen oder Kondensationsreaktionen, kommt es üblicherweise zu einer Reagglomeration bereits dispergierter Kieselsäure, so dass eine gleichmäßige Verteilung von dem Füllstoff in einem Kautschuk erheblich erschwert ist. Durch den Einsatz des erfindungsgemäßen Prozessöles wird die Oberfläche der Kieselsäurepartikel bzw. des Silicas zumindest teilweise hydrophobiert und die Einmischung dieses Füllstoffes in die (hydrophobe) Kautschukmatrix deutlich verbessert - die Mischzeit kann weiter verkürzt werden, die Temperaturkontrolle der Einzelmischungen wird vereinfacht, der Energieeintrag zur Mischungsherstellung reduziert. Der Einsatz von Verarbeitungshilfsmitteln kann reduziert werden, ggf. kann auf derartige Verarbeitungshilfsmittel sogar gänzlich verzichtet werden. Bei den herkömmlichen Verarbeitungshilfsmitteln handelt es sich beispielsweise um Silane, die vergleichsweise teure Einsatzstoffe sind. Weitere Verarbeitungshilfsmittel sind z.B. Trimethylolpropan, Glycerin, Glykole und Polyethylenglykole. Letztere führen typischerweise zu einer Depression des Moduls.

Ein Vergleich der Dispersionen aus Kautschuk mit herkömmlichem Prozessöl und mit erfindungsgemäßem Prozessöl zeigt eine Verbesserung der Dispergierung des Prozessöls im Kautschuk von 88 % auf 92 gemäß (DIAS, DIK-Methode).

Bei der Substitution von Verarbeitungshilfsmitteln durch modifizierte Weichmacher wird überraschenderweise keine Moduldepression festgestellt.

Zusammenfassend lässt sich feststellen, dass bei Einsatz der erfindungsgemäßen Prozessöle bei günstigeren Mischbedingungen ein alterungsbeständigeres Produkt erhalten wird, wobei gleichzeitig nur noch geringere oder gar keine Mengen an teuren Verarbeitungshilfsmitteln benötigt werden.

Die Erfindung soll anhand der folgenden Beispiele näher erläutert werden, ohne sie auf diese zu beschränken.

### Beispiel 1 Herstellung eines funktionalisierten TDAE-Öls

Bei 120 °C wurden 200 g TDAE-Öl in einem zylindrischen Gefäß vorgelegt. Mittels eines Gaseinleitrohres und einer Fritte wurde Luft mit einer Strömungsgeschwindigkeit von ca. 5 l/h für 50 h durchgeleitet und in einstündigem Abstand ein IR-Spektrum vermessen. Im Bereich der OH-Bande bei 3.400 cm⁻¹ und 1.003 cm⁻¹ wurde eine Zunahme der Extinktion der Bande festgestellt.

### Beispiel 2 Eigenschaften erfindungsgemäßer funktionalisierter Prozessöle

Ein TDAE- Prozessöl wurde wie in Beispiel 1 beschrieben mit Luft behandelt. Als Reaktionstemperatur wurde eine Temperatur von 160°C gewählt. Die Behandlung des Prozessöls mit Luft unter Erhitzen erfolgte über 28h.

Die Zusammensetzung des Prozessöls wurde anschließend beispielhaft mittels Flüssigkeitschromatographie/IR-Spektroskopie bestimmt. Dabei wurde eine Flüssigkeitschromatografie mit folgenden Parametern verwendet:
Shimadzu-Pumpe mit Detektorkombination UV und RI. Als Säule wurde eine Spherisorb der Fa. Waters eingesetzt. Das IR ist von Thermo Fisher Scientific.
GC-MS: GC von Carlo Erba, Säule von Waters (30 m Glaskapillarsäule)

Bei der Flüssigkeitschromatographie wurden nacheinander die Lösungsmittel n-Heptan, Toluol, Methylethylketon und 2-Propanol verwendet. In der n-Heptan-Fraktion wurden die im Prozessöl vorhandenen n-Paraffine und Naphthene erhalten, die Toluol-Fraktion enthielt die Aromaten. Aus den in diesen beiden Fraktionen erhaltenen Verbindungen ergeben sich die Anteile nicht oxidierter (und folglich der unpolarer) Komponenten des mit Luft behandelten Prozessöls. Für das erfindungsgemäße Prozessöl wurde ein Wert von 71,7 Gew.-% erhalten. Daraus ergibt sich ein Wert von 28,3 Gew.-% für funktionalisierte Verbindungen. Unter den funktionalisierten Verbindungen fanden sich mindestens aromatische Alkohole (z.B. 2-Methyl-1-phenyl-propan-2-ol), Alkohole (z.B. Henicosan-11-ol, 3,6-Dimethylheptan-3-ol), Ketone (z.B. 8-Octadecanon, Tridecan-3-on), Säuren (z.B. 3-Propan-2-yl-benzoesäure) und Ester (z.B. Dibutyl-benzen-1,2-dicarboxylat).

### Beispiel 2a Anbindung der funktionalisierten Prozessöle an Silica

Das funktionalisierte Prozessöl aus Beispiel 2 wurde mit Silica (Vulkasil 7000 GR von Evonik) in einem Verhältnis von 50:50 (Gewichtsanteile) vermischt. Es wurde mit n-Heptan über einen Temperaturbereich von 40 bis 700°C eluiert.

Der Anteil des an Silica angebundenen funktionalisierten Prozessöls wurde mittels Thermogravimetrie bestimmt. Hierzu wurde ein Gerät von Mettler-Toledo, Typ Star System verwendet. verwendet. Es wurde jeweils eine Probenmenge von 5 mg untersucht, und zwar bei Aufheizung in einem Temperaturbereich von 40 bis 750°C und einer Heizrate von 10 K/min. Dabei war die Gasatmosphäre in einem Temperaturbereich von 40 bis 600°C eine Stickstoffatmosphäre und von 600 bis 750°C eine Atmosphäre aus synthetischer Luft mit 21 Vol.-% Sauerstoff.

Bei den in Tabelle 1 angegebenen Werten handelt es sich um Mengenanteile der einzelnen Komponenten an der mittels Thermogravimetrie untersuchten Probensubstanz. Die Werte wurden gerundet.

**Tabelle 1**

| | **Zusammensetzung erfindungsgemäßes Prozessöl, Anteile [Gew.-%]** |
|---|---|
| Temperaturbereich bei der Thermogravimetrie [°C] | |
| 40 - 150 (flüchtige Stoffe, u.a. Wasser, n-Heptan-Reste) | 2,3 |
| 150 - 260 (flüchtige Stoffe) | 1,1 |
| 260 - 400 (gebundenes niedermolekulares Prozessöl) | 4,6 |
| 400 - 504 (gebundenes hochmolekulares Prozessöl) | 4,4 |
| 504 - 590 (gebundenes Rückstandsprozessöl) | 1,4 |
| 590 - 700 (Verbrennungsrückstand gebundenen Prozessöls) | 3,8 |
| Anorganischer Rückstand (Silica) | 82,5 |
| Gesamtanteil gebundenes funktionalisiertes Prozessöl | 14,2 |

### Beispiel 2b Mischung der erfindungsgemäßen Prozessöle mit Kieselsäure

TDAE (Vivatec^{®} 500) wurde bei 160 °C über mehrere Stunden durch Einleiten von Luft im Laborkolben oxidiert. Zu unterschiedlichen Zeiten (= Oxidationsgraden) wurden Proben entnommen und diese im Verhältnis 50 : 50 mit Kieselsäure (Utrasil 7000 GR, Evonik) gemischt. Die Gemische wurden der thermogravimetrischen Untersuchung zugeführt und dort sukzessive bis 700 °C erhitzt. Bei Erreichen und Überschreiten der Temperatur von 400 °C wurde erkannt, dass sich das Verdampfungsverhalten der Proben unterschied. Je höher der Oxidationsgrad (je länger die Oxidationseinwirkung), desto mehr Öl war an der Kieselsäure gebunden, wie sich aus Tabelle 2 entnehmen läßt.

**Tabelle 2**

| | | | | | |
|---|---|---|---|---|---|
| Oxidationszeit [h] | 0 | 4 | 28 | 50 | 70 |
| Gebundenes Öl [%] | 8,9 | 17,4 | 23,8 | 7,9 | 33,6 |

### Beispiel 2c Einfluss der funktionalisierten Prozessöle auf die Eigenschaften eines Kautschuks

Das funktionalisierte Prozessöl aus Beispiel 2 wurde in einen Kautschuk eingebracht. Die genaue Zusammensetzung der Mischung aus der Kautschukkomponente und dem Prozessöl ergibt sich aus Tabelle 3, wobei die Anteile jeweils auf 100 Teile Kautschuk berechnet sind.

**Tabelle 3**

| | **Zusammensetzung Kautschuk mit eingebrachtem Prozessöl, Anteile** |
|---|---|
| Buna VSL 5025-0 HM | 70,0 |
| Buna CB 24 | 30,0 |
| Ultrasil 7000 GR | 70,0 |
| Si 69 | 5,6 |
| Zinkoxid RS | 2,5 |
| Stearinsäure | 1,0 |
| Vulkanox HS (TMQ) | 1,0 |
| Vulkanox 4020 (6PPD) | 1,0 |
| über 28h funktionalisiertes Prozessöl | 37,5 |
| Schwefel | 1,5 |
| Vulkacit CZ (CBS) | 1,8 |
| Vulkacit D (DPG) | 2,0 |

Tabelle 3 sind die Eigenschaften des Kautschuks, in welchen das funktionalisierte Prozessöl gemäß Beispiel 2 eingebracht ist, zu entnehmen. Die funktionalisierten Prozessöle führen bei Kautschuken zu einer gesteigerten Elastizität.

### Beispiel 3 Vergleich der Eigenschaften eines erfindungsgemäßen Prozessöls mit einem herkömmlichen Produkt

Die erfindungsgemäßen Prozessöle lassen sich wir herkömmliche Prozessöle beispielsweise in Kautschucke einarbeiten. Tabelle 4 zeigt einen Vergleich der Eigenschaften des reinen Prozessöls, vor der Verarbeitung.

**Tabelle 4**

| | **Norm** | **TDAE,** | **TDAE, 28 h oxidiert** |
|---|---|---|---|
| d15 | DIN 51 757 T. 7 | 946 | 958 |
| V40 [mm²/s] | DIN 51562 T. 1 | 397 | 752 |
| V100 [mm²/s] | DIN 51562 T. 1 | 19,0 | 27,4 |
| nD20 | DIN 51 423 B. 2 | 1,5247 | 1,5289 |
| CA [%] | DIN 51378 | 24 | 24 |
| CN [%] | DIN 51378 | 31 | 38 |
| CP [%] | DIN 51378 | 45 | 39 |
| Anilinpunkt [°C] | DIN ISO 2977 | 69 | 61 |
| Säurezahl [mg KOH/g] | Hausmethode | 0,29 | 3,57 |
| IR, Extinktion | Hausmethode | <0,01 | 5,8 |
| TG [°C] | ASTM E 1356 | -50 | -48 |

Die beiden Prozessöle wurden in ein Compund eingearbeitet. Die erhaltenen Compund hatten die in Tabelle 5 gezeigte Zusammensetzung.

**Tabelle 5**

| Rohmaterial | Produkt, Hersteller | Vergleich | Beispiel 4a | Beispiel 4b |
|---|---|---|---|---|
| Buna VSL 5025-0 HM | SSBR, Lanxess | 70 | 70 | 70 |
| Buna CB 24 | NdBR, Lanxess | 30 | 30 | 30 |
| Ultrasil 7000 GR | Silika, Evonik | 80 | 80 | 80 |
| SI 75 | Silan, Evonik | 5,8 | 5,8 | 4, 35 |
| Corax N 234 | Ruß, Evonik | 10 | 10 | 10 |
| Vulkanox 4020/LG | 6PPD, Lanxess | 1 | 1 | 1 |
| Vulkanox HS/LG | TMQ, Lanxess | 1 | 1 | 1 |
| Zinkweiss Rotsiegel | ZnO, Grillo | 3 | 3 | 3 |
| Stearinsäure | | 1 | 1 | 1 |
| Vulkacit D/C | Sulfenamid, Lanxess | 2 | 2 | 2 |
| Vulkacit CZ/C | Sulfenamid, Lanxess | 1,5 | 1,5 | 1,5 |
| Schwefel | | 1,8 | 1,8 | 1,8 |
| Vivatec 500 | TDAE-Öl, H&R | 37,5 | | |
| erfindungsgemäßes Prozessöl, (28 h oxidiert) | | | 37,5 | 37,5 |

Die so erhaltenen Compounds wurden bei 170°C 15 min vulkanisiert. Es wurden dann die Eigenschaften der Vulkanisate gemessen. Die verwendeten Messmethoden und die Ergebnisse der Messungen sind in Tabelle 6 zusammengestellt.

**Tabelle 6**

| | | Vergleich | Beispiel 4a | Beispiel 4b |
|---|---|---|---|---|
| **Härte A/D Standard** | Härte ShA bei 23 °C | 61 | 59 | 62 |
| | Härte ShA bei 70 °C | 59 | 58 | 59 |
| **Rückprallelastizität** | R (23°C) | 33,5 | 32,2 | 33 |
| | R (70°C) | 55 | 54 | 56 |
| **Zugversuch Stab S2** | Bruchdehnung: | 440 | 455 | 425 |
| | Bruchspannung: | 18,5 | 18,9 | 18,4 |
| **Tangens Delta** | 0 °C | 0,52 | 0,54 | 0,51 |
| | 60 °C | 0,13 | 0,09 | 0,12 |
| **Abrieb** | Abrieb DIN 53516 | 102 | 96 | 107 |

Die geringere Härte ist ein Beleg für die bessere Dispergierung der Kieselsäure im Compound. Der Tan D 60°C zeigt, das die Vulkansiate mit dem erfindungsgemäßen Prozessöl einen signifikant verbesserten Rollwiderstand aufweisen. Auch der Abrieb ist deutlich besser gegenüber dem Standard. Die Verwendung des erfindungsgemä-βen Prozessöls erlaubt es bis zu 25 % Silan einzusparen kann und dennoch Produkte mit der geforderten Qualität zu erreichen.

**Tabelle 7**

| | **Kautschuk mit eingebrachtem Prozessöl, das über einen Zeitraum von 28h funktionalisiert worden ist** |
|---|---|
| **Dehnung[%]** | 460 |
| **Zugfestigkeit [MPa]** | 17,1 |
| **Zugmodul [MPa]** | 2,0 |
| **Druckverformung bei 70°C [%]** | 16,6 |

## Patentansprüche

1. Funktionalisiertes Prozessöl, **dadurch gekennzeichnet, dass** das Prozessöl raffiniert, extrahiert und ggf. entparaffiniert ist, Hydroxylgruppen, Carbonylgruppen, Carboxylgruppen und/oder Estergruppen aufweist und hergestellt wird durch Oxidation eines Prozessöls, ausgewählt aus der Gruppe, bestehend aus TDAE (**t**reated **d**istillate **a**romatic **e**xtract), MES (**m**ild **e**xtraction **s**olvate), RAE, naphthenischen Prozessölen und paraffinischen Prozessölen, vorzugsweise aus TDAE und MES.

2. Prozessöl gemäß Anspruch 1, **dadurch gekennzeichnet, dass** das Prozessöl ein oxidiertes Prozessöl ist und bevorzugt 10 bis 40 Gew.-% des Prozessöls oxidiert sind.

3. Prozessöl gemäß Anspruch 2, **dadurch gekennzeichnet, dass** das Prozessöl durch Umsetzung mit einem Oxidationsmittel, bevorzugt Sauerstoff, einem Sauerstoffgemisch und/oder Wasserstoffperoxid oder Natriumhypochloritlösung oxidiert worden ist.

4. Prozessöl gemäß einem der vorhergehenden Ansprüche, **dadurch gekennzeichnet, dass** es einen niedrigen PCA-Gehalt aufweist, vorzugsweise einen PCA-Gehalt von weniger als 3 Gew.-%, bestimmt nach IP 346.

5. Verfahren zur Herstellung eines funktionalisierten Prozessöls, **dadurch gekennzeichnet, dass** ein Prozessöl ausgewählt aus der Gruppe, bestehend aus TDAE (treated distillate aromatic extract), MES (mild extraction solvate), RAE, naphthenischen Prozessölen und paraffinischen Prozessölen mit Sauerstoff, einem sauerstoffhaltigen Gasgemisch oder einem Peroxid und/oder Natriumhypochlorit oxidiert wird.

6. Verfahren gemäß Anspruch 5, **dadurch gekennzeichnet, dass** es die Schritte umfasst:
- Erhitzen eines raffinierten und ggf. extrahierten, ggf. hydrierten und ggf. entparaffinierten Prozessöls auf eine Temperatur zwischen 50 und 180°C,
- Einleiten eines sauerstoffhaltigen Gemisches mit einem Sauerstoffanteil von 5 bis 50 Gew.-%, vorzugsweise Luft, oder eines Sauerstoff/Inertgasgemisches.

7. Verfahren gemäß einem der Ansprüche 5 oder 6, **dadurch gekennzeichnet, dass** das Prozessöl einen niedrigen PCA-Gehalt aufweist, vorzugsweise einen PCA-Gehalt von weniger als 3 Gew.-% nach IP 346.

8. Verfahren gemäß einem der Ansprüche 5 bis 7, **dadurch gekennzeichnet, dass** das Prozessöl TDAE oder MES ist.

9. Verfahren gemäß einem der Ansprüche 5 bis 8, **dadurch gekennzeichnet, dass** die Oxidation direkt im Anschluss an die Prozessölgewinnung durchgeführt wird, vorzugsweise als kontinuierliches Verfahren.
